# FASCICULE DE BREVET EUROPEEN

(11) **EP 4 217 591 B1**
(45) Date de publication et mention de la délivrance du brevet: **18.09.2024**
(21) Numéro de dépôt: 21798417.8
(22) Date de dépôt: 28.09.2021
(51) Int. Cl.: F01D 9/06, F01D 21/00

(54) **TURBOMACHINE COMPORTANT DES MOYENS DE SUPPORT DE HARNAIS AMÉLIORÉS**
TURBINENMOTOR MIT VERBESSERTEN GURTSTÜTZEN
TURBINE ENGINE COMPRISING IMPROVED HARNESS SUPPORT MEANS

(30) Priorité: 28.09.2020 FR 2009815
(43) Date de publication de la demande: 02.08.2023
(73) Titulaire: SAFRAN AIRCRAFT ENGINES, 75015 Paris (FR)
(72) Inventeur: GASPAR, Patrice, 77550 MOISSY-CRAMAYEL (FR); HOBALLAH, Samy Alexandre, 77550 MOISSY-CRAMAYEL (FR); MATHIAS, Cyrille François Antoine, 77550 MOISSY-CRAMAYEL (FR); TAN, Khy, 77550 MOISSY-CRAMAYEL (FR); THEBAUD, Edouard, 77550 MOISSY-CRAMAYEL (FR)
(74) Mandataire: Brevalex
(86) Numéro de dépôt international: PCT/FR2021/051666
(87) Numéro de publication internationale: WO 2022/064160

(56) Documents cités:
- WO-A1-2014/188122
- WO-A1-2015/092308
- FR-A1- 2 996 070

## Description

### DOMAINE TECHNIQUE

L'invention concerne une turbomachine comportant des moyens simplifiés d'assemblage de harnais électriques à un bras radial de support.

### ÉTAT DE LA TECHNIQUE ANTÉRIEURE

Une turbomachine d'aéronef comporte une pluralité de câbles électriques et de tuyaux qui sont destinés à relier des composants de la turbomachine situés à un endroit, soit à d'autres composants, soit à des sources d'énergie électrique ou des sources de fluide circulant dans les tuyaux.

Pour sécuriser le cheminement de ces câbles électriques et de ces tuyaux, il est connu d'utiliser des harnais, dans lesquels les câbles et les tuyaux sont regroupés.

Ces harnais sont à leur tour fixés à une structure fixe de la turbomachine, par l'intermédiaire de blocs de montage.

Selon un mode de réalisation d'un bloc de montage, celui-ci est réalisé en trois parties qui sont serrées deux à deux de part et d'autre de tronçons de harnais alignés.

L'assemblage des parties du bloc de montage avec les harnais est relativement complexe car un premier groupe de tronçons de harnais doit être fixé au bloc de montage avant de fixer le reste des tronçons de harnais.

La difficulté de l'assemblage est d'autant plus grande car le bloc de montage doit être assemblé avec les harnais après le passage des harnais au travers d'ouvertures formées dans la structure fixe.

Les différents assemblages s'effectuent par vissage, des parties du bloc les unes aux autres et sur la structure fixe, respectivement.

Cependant, puisque les harnais sont déjà mis en place par rapport à la structure fixe, l'accessibilité aux vis de fixation est difficile.

Il en résulte un risque de mauvais assemblage, se traduisant par un potentiel pincement des harnais, un mauvais positionnement du bloc ou un serrage insuffisant des vis.

L'invention a pour but de proposer une solution permettant de faciliter et fiabiliser la liaison des harnais avec la structure fixe de la turbomachine.

FR 2996070 A1, divulgue un système de guidage de câbles électriques qui est monté sur une turbomachine d'aéronef, et qui permet de monter un ou plusieurs câbles en travers d'une veine aérodynamique de la turbomachine, et de protéger ce ou ces câble(s) lors du fonctionnement de la turbomachine.

WO 2015/092308 A1, divulgue un bras de guidage d'éléments de forme allongée, en particulier adapté au passage d'éléments de forme allongée au travers d'une veine de turbomachine telle qu'un turboréacteur ou un turbopropulseur.

WO 2014/188122 A1, divulgue un dispositif de passage de servitudes pour une turbomachine, comprenant deux viroles annulaires coaxiales, respectivement interne et externe, entre lesquelles s'étendent des bras radiaux dont au moins un sert de passage à des servitudes, et des moyens de maintien des servitudes logés à l'intérieur du bras.

### EXPOSÉ DE L'INVENTION

L'invention propose une turbomachine d'aéronef d'axe principal A comportant :
- un bras radial par rapport à l'axe principal A s'étendant au travers d'une veine d'écoulement d'air ;
- une paroi de support appartenant au bras radial et qui comporte deux ouvertures ;
- une pluralité de harnais s'étendant en partie au travers du bras radial et dont un tronçon de chaque harnais est fixé à ladite paroi de support du bras ;
caractérisée en ce qu'elle comporte deux blocs de montage dont chaque bloc de montage est associé à un groupe de tronçons de harnais.

De préférence, la turbomachine comporte des moyens de fixation d'un bloc de montage sur la paroi de support qui sont indépendants des moyens de fixation de l'autre bloc de montage sur la paroi de support.

De préférence, chaque bloc de montage est fixé à la paroi de support par boulonnage.

De préférence, chaque bloc de montage comporte un corps qui est relié à la paroi de support et un fut qui reçoit un tronçon de harnais associé

De préférence, le corps comporte une face qui est en contact avec la paroi de support et comporte un épaulement faisant saillie par rapport à ladite face du corps, la section de l'épaulement étant complémentaire de ladite ouverture.

De préférence, la paroi de support s'étend dans un plan sensiblement perpendiculaire à une direction radiale par rapport à l'axe principal A de la Turbomachine, et ladite face du corps est fixée à une face de la paroi de support qui est radialement externe par rapport à l'axe principal A de la Turbomachine.

De préférence, chaque bloc de montage est constitué de deux parties montées de part et d'autre des tronçons de harnais auxquels le bloc de montage est associé.

De préférence, les deux parties d'un bloc de montage sont reliées avec les tronçons de harnais associés avant l'assemblage du bloc de montage sur la paroi de support.

De préférence, chaque partie du bloc de montage comporte une partie de chaque fut dudit bloc de montage.

De préférence, le bras radial se situe à une position 6 heures, par analogie avec le cadran d'une horloge.

### BRÈVE DESCRIPTION DES DESSINS

[Fig. 1] est une représentation schématique en section partielle d'une turbomachine montrant la localisation des tronçons de harnais à relier au bras de support.
[Fig. 2] est une vue selon une direction radiale vers l'extérieur des blocs de montage qui sont assemblés sur la paroi de support.

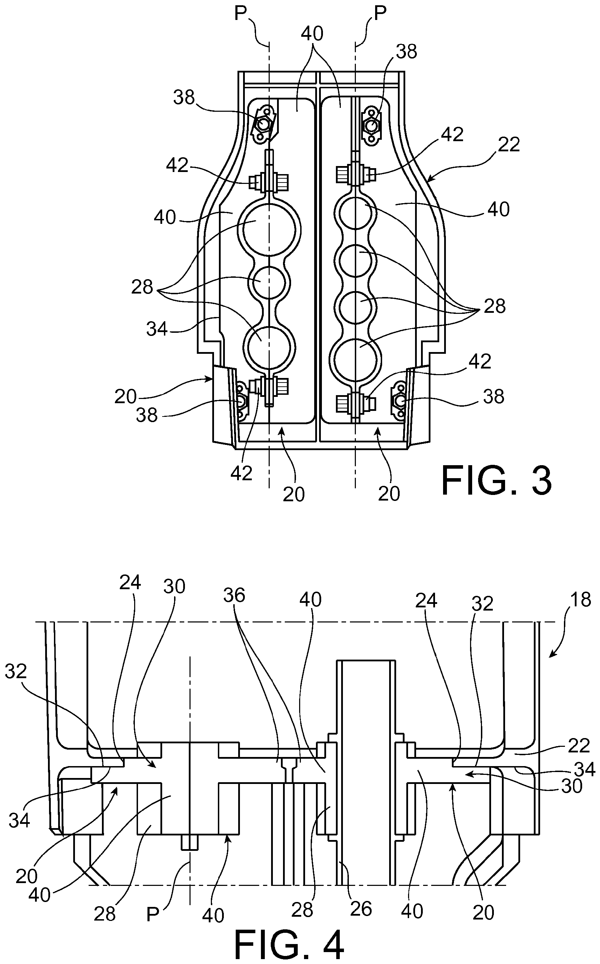

[Fig. 3] est une vue selon une direction radiale vers l'intérieur des blocs de montages représentés à la figure 2.
[Fig. 4] est une section selon un plan radial perpendiculaire à l'axe principal A de la turbomachine montrant les deux blocs de montage assemblés sur la paroi de support.

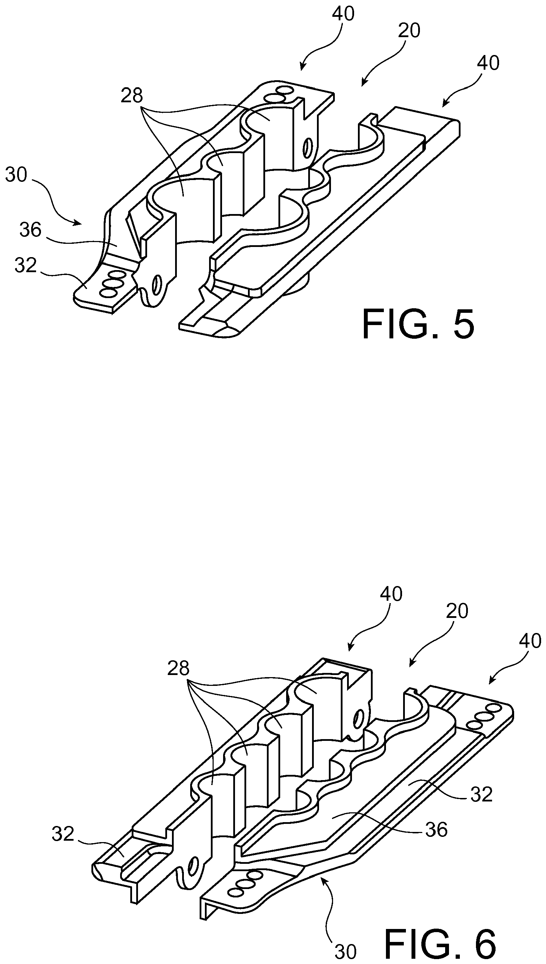

[Fig. 5] est une représentation schématique en perspective d'un bloc de montage séparé en deux parties, avant son assemblage avec les tronçons de harnais.
[Fig. 6] est une représentation schématique en perspective d'un bloc de montage séparé en deux parties, avant son assemblage avec les tronçons de harnais.

### EXPOSÉ DÉTAILLÉ DE L'INVENTION

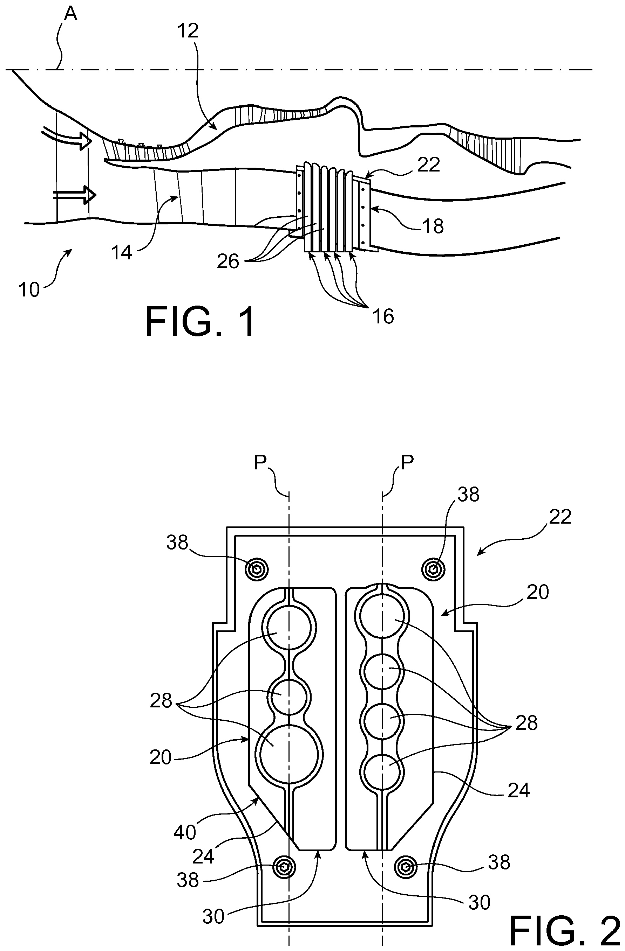

On a représenté à la figure 1 une partie d'une turbomachine 10 d'axe principal A.

La turbomachine 10 comporte une veine primaire 12 radialement interne de circulation d'un flux d'air primaire et une veine secondaire 14 radialement externe de circulation d'un flux d'air secondaire, les deux veines 12, 14 sont coaxiales à l'axe principal A de la turbomachine 10.

La turbomachine 10 comporte une pluralité de composants qui sont répartis en de nombreux points et qui doivent être raccordés électriquement ou fluidiquement à d'autres composants.

Le raccordement électrique ou fluidique des composants s'effectue par des câbles électriques ou des tuyaux, respectivement, dont certains s'étendent au travers de l'une ou l'autre de la veine primaire 12 ou de la veine secondaire 14.

Pour cela, les câbles ou tuyaux sont rassemblés en plusieurs groupes disposés dans des gaines communément appelés harnais 16, qui traversent des bras radiaux 18 s'étendant au travers de chaque veine 12, 14.

Les harnais 16 sont maintenus en place à chaque extrémité radiale d'un bras radial 18 par l'utilisation de blocs de montage 20 que l'on décrira plus en détails par la suite.

De préférence, chaque extrémité radiale d'un bras radial 18 comporte une paroi de support 22 qui s'étend perpendiculairement à la direction radiale du bras radial 18 et elle comporte des ouvertures 24, ici au nombre de deux, au travers desquelles les harnais 16 s'étendent.

Dans la description qui va suivre on fera référence à un tronçon 26 de chaque harnais 16. Ce tronçon 26 d'un harnais 16 est la partie du harnais 16 qui s'étend au travers d'une ouverture 24 de la paroi de support 22 lorsque le harnais 16 est monté dans la turbomachine.

Les tronçons 26 des harnais 16 sont maintenus en position par rapport à la paroi de support 22 par l'intermédiaire des blocs de montage 20.

Chaque bloc de montage 20 est associé à une ouverture 24 de la paroi de support 22 c'est-à-dire qu'ici, deux blocs de montage 20 sont associés à la paroi de support et aux harnais 16 à lui fixer.

Dans la description qui va suivre, on fera référence à un seul bloc de montage 20. Il sera compris que la description de l'autre bloc de montage 20 se déduira de la description du premier bloc de montage par similitude.

Le bloc de montage 20 comporte plusieurs futs 28 dont chaque fut 28 est associé à un tronçon 26 d'un harnais 16 associé au bloc de montage 20. Les dimensions de chaque fut 28, c'est-à-dire notamment le diamètre de celui-ci est défini en fonction du diamètre du tronçon 26 de harnais qui lui est associé.

Chaque tronçon 26 est en outre monté serré dans le fut 28 qui lui est associé.

Les futs 28 sont situés dans l'ouverture 24 de la paroi de support 22 associée au bloc de montage 20.

Le bloc de montage 20 comporte aussi un corps 30 principalement plan qui s'étend sensiblement parallèlement au plan de la paroi de support 22 et qui est relié aux futs 28 et à la paroi de support 22.

Le corps 30 comporte une face périphérique 32 parallèle au plan de la paroi de support 22, qui est située en vis-à-vis et qui est en contact avec une face de contact 34 de la paroi de support 22.

Le corps 30 comporte aussi un épaulement 36 qui est de forme complémentaire de l'ouverture 24 associés de la paroi de support 22 et qui fait saillie par rapport à la face périphérique 32.

Cet épaulement 36 s'étend à l'intérieur de l'ouverture 24 de la paroi de support 22 qui est associée au bloc de montage 20, assurant un positionnement du bloc de montage 20 par rapport à la paroi de support 22.

Les moyens de fixation du bloc de montage 20 sur la paroi de support 22 consistent ici en un système de boulonnage 38, qui réalise la fixation du bloc de montage 20 sur la paroi de support 22 en serrant la face périphérique 32 du corps 30 contre la face de contact 34 de la paroi de support 22.

Chaque bloc de montage 20 est réalisé en deux parties 40 qui sont montées de part et d'autre des tronçons 26 de harnais 16.

De préférence, chacune des deux parties 40 du bloc de montage 20 comporte une partie de chaque fut 28 du bloc de montage 20, c'est-à-dire que chaque fut est formé en partie dans chaque partie 40 du bloc de montage 20.

Selon un mode de réalisation préféré, les deux parties 40 du bloc de montage 20 sont séparées par un plan de joint P passant par tous les futs 28 du bloc de montage 20.

Ainsi, lorsque les deux parties 40 sont séparées l'une de l'autre, il est possible d'introduire chaque tronçon 26 de harnais 16 dans une portion du fut 28 qui lui est associé. Puis en assemblant les deux parties 40 pour former le bloc de montage 20, elles serrent entre elles les tronçons 26 de harnais 16.

Selon un mode de réalisation préféré, les futs 28 sont alignés les uns avec les autres, selon une direction parallèle au plan principal du corps 30. Le plan de joint P est ainsi plan et il est parallèle à la direction radiale par rapport à l'axe principal A.

Les deux parties 40 du bloc de montage 20 sont fixées l'une à l'autre par tout moyen connu, par exemple par des boulons 42, ces moyens de fixation des deux parties 40 du bloc de montage 20 sont indépendantes des moyens de fixation du bloc de montage 20 sur la paroi de support 22.

Dans le mode de réalisation représenté aux figures, la paroi de support 22 comporte deux ouvertures 24.

Les tronçons 26 des harnais 16 sont ainsi répartis en deux groupes de tronçons 26, dont chaque groupe de tronçons 26 de harnais 16 est associé à une ouverture 24. Aussi, les tronçons 26 de harnais 16 des deux groupes forment deux alignements qui sont parallèles l'un à l'autre.

Chaque groupe de tronçons 26 de harnais 16 est fixé à la paroi de support 22 par l'intermédiaire d'un bloc de montage 20 qui lui est associé, c'est-à-dire que l'ensemble des tronçons 26 de harnais 16 sont fixés à la paroi de support 22 par deux blocs de montage 20.

Les moyens de fixation d'un bloc de montage 20 sur la paroi de support 22, c'est-à-dire ici chaque système de boulonnage 38, sont indépendants des moyens de fixation de l'autre bloc de montage 20 sur la paroi de support 22.

Ainsi, il est possible de monter un groupe de tronçons 26 de harnais 16 sur la paroi de support indépendamment de l'autre groupe de tronçons 26 de harnais 16.

Comme on l'a dit plus haut, les deux parties 40 d'un bloc de montage 20 sont fixées aux tronçons 26 de harnais 16 par des boulons 42, qui sont indépendants des moyens de fixation du bloc de montage 20 sur la paroi de support 22. Ainsi, les deux parties 40 du bloc de montage 20 peuvent être assemblées sur les tronçons 26 de harnais 16 avant la fixation du bloc de montage 20 sur la paroi de support 22.

Ainsi, un processus d'assemblage de l'ensemble des tronçons 26 de harnais 16 sur la paroi de support 22 comprend une première phase de liaison des tronçons 26 de harnais 16 de chaque groupe de tronçons 26 de harnais 16, avec le bloc de montage 20 qui lui est associé pour former deux sous-ensembles, un premier sous-ensemble comportant un premier groupe de tronçons 26 de harnais 16 et le bloc de montage qui est associé à ce premier groupe de tronçons 26 de harnais 16, le deuxième sous ensemble comportant l'autre groupe de tronçons 26 de harnais 16 et le bloc de montage 20 qui est associé à cet autre groupe de tronçons 26 de harnais 16.

Pour cela, les tronçons 26 de harnais 16 sont mis en place dans les portions de futs 28 d'une première partie 40 du bloc de montage 20.

Ensuite, la deuxième partie 40 du bloc de montage 20 est fixée à la première partie 40 du bloc de montage par les boulons 42, les tronçons de harnais 16 sont alors serrés dans le bloc de montage 20.

A l'issue de cette première phase, chaque groupe de tronçons 26 de harnais 16 est fixé au bloc de montage 20 qui lui est associé.

Il sera compris que cette première phase de liaison des tronçons 26 de harnais 16 peut être mise en oeuvre avant ou après une phase consistant à faire passer les harnais 16 au travers des ouvertures 24 de la paroi de support 22.

Selon une deuxième phase du processus d'assemblage, le premier sous-ensemble, qui est formé par le premier groupe de tronçons 26 de harnais 16 et le bloc de montage 20 qui est associé à ce premier groupe de tronçons 26 de harnais 16, est fixé à la paroi de support 22. Ensuite, le deuxième sous-ensemble qui est formé par l'autre groupe de tronçons 26 de harnais 16 et le bloc de montage 20 qui est associé à cet autre groupe de tronçons 26 de harnais 16 est fixé à la paroi de support 22.

Selon cette deuxième phase, le corps 30 de chaque bloc de montage 20 est positionné sur la paroi de support 22 avec l'épaulement 36 introduit dans l'ouverture 24 associée. Ensuite, le bloc de montage 20 est fixé à la paroi de support 22 par le système de boulonnage 38.

De préférence, la face de contact 34 de la paroi de support 22 sur laquelle la face périphérique est mise en contact, est la face radialement externe de la paroi de support 22, par rapport à l'axe principal A de la turbomachine.

Ainsi, le corps 30 du bloc de montage 20 est monté sur la paroi de support 22 selon un mouvement radial en direction de l'axe principal A de la turbomachine. Ce mouvement est plus naturel et plus facile à réaliser qu'un mouvement radial vers l'extérieur puisque l'accès à un côté radial vers l'intérieur de la paroi de support 22 est plus restreint que l'accès à la face radialement externe de la paroi de support.

Pendant cette deuxième phase, chaque sous-ensemble formé par un groupe de tronçons 26 de harnais 16 et le bloc de montage 20 qui leur est associé, est fixé indépendamment de l'autre sous ensemble.

Cela permet de faciliter la manoeuvre pour l'opérateur en charge de l'assemblage puisqu'il n'a qu'un seul sous-ensemble à manipuler, l'autre sous-ensemble étant soit fixé à la paroi de support 22 ou bien étant à distance de celle-ci.

Aussi, lorsqu'une opération de maintenance sur la turbomachine doit être réalisée sur un harnais 16, il n'y a qu'un seul bloc de montage 20, et les tronçons 26 de harnais 16 qui lui sont associés, à démonter, l'ensemble des manoeuvres est ainsi ici encore plus aisé pour l'opérateur que lorsque la totalité des tronçons de harnais 16 sont fixés à un seul bloc de montage.

Par ailleurs, la première phase de liaison des tronçons avec les blocs de montage 20 peut être mise en oeuvre à distance de la paroi de support 22, ce qui facilite encore les manipulations de l'opérateur qui dispose d'un espace plus important lorsqu'il opère à distance de la paroi de support 22.

Cet avantage est d'autant plus important lorsque le bras radial 18 auquel les harnais sont fixés se situe à la position communément appelée 6 heures, par analogie avec le cadran d'une horloge, c'est-à-dire le bras radial 18 qui est situé dans la partie inférieure de la turbomachine 10 et qui est vertical.

Cette position est particulièrement difficile d'accès pour un opérateur. Ainsi, l'assemblage des tronçons de harnais 16 avec les blocs de montage 20 avant leur montage sur la paroi de support 22 permet d'exécuter certaines opérations en un endroit plus facile d'accès. Le risque d'endommager les harnais 16 par serrage du bloc de montage 20 est ainsi réduit puisque l'opérateur peut maîtriser le positionnement relatif des tronçons 26 de harnais 16 par rapport à chaque partie 40 du bloc de montage 20.

## Revendications

1. Turbomachine (10) d'aéronef d'axe principal A comportant :
- un bras radial (18) par rapport à l'axe principal A s'étendant au travers d'une veine (14) d'écoulement d'air ;
- une paroi de support (22) appartenant au bras radial (18) et qui comporte deux ouvertures (24) ;
- une pluralité de harnais (16) s'étendant en partie au travers du bras radial (18) et dont un tronçon (26) de chaque harnais (16) est fixé à ladite paroi de support (22) du bras (18) ;
**caractérisée en ce qu'**elle comporte deux blocs de montage (20) dont chaque bloc de montage (20) est associé à un groupe de tronçons (26) de harnais (16).

2. Turbomachine (10) selon la revendication précédente, **caractérisée en ce qu'**elle comporte des moyens de fixation d'un bloc de montage (20) sur la paroi de support (22) qui sont indépendants des moyens de fixation de l'autre bloc de montage (20) sur la paroi de support (22).

3. Turbomachine (10) selon la revendication 1 ou 2, **caractérisée en ce que** chaque bloc de montage (20) est fixé à la paroi de support (22) par boulonnage.

4. Turbomachine (10) selon l'une quelconque des revendications précédentes, **caractérisée en ce que** chaque bloc de montage (20) comporte un corps (30) qui est relié à la paroi de support (22) et un fut (28) qui reçoit un tronçon (26) de harnais (16) associé

5. Turbomachine (10) selon la revendication précédente, **caractérisée en ce que** le corps (30) comporte une face (32) qui est en contact avec la paroi de support (22) et comporte un épaulement (36) faisant saillie par rapport à ladite face (32) du corps (30), la section de l'épaulement (36) étant complémentaire de ladite ouverture (24).

6. Turbomachine (10) selon la revendication précédente, dans laquelle la paroi de support (22) s'étend dans un plan sensiblement perpendiculaire à une direction radiale par rapport à l'axe principal A de la Turbomachine (10),
**caractérisée en ce que** ladite face (32) du corps (30) est fixée à une face (34) de la paroi de support (22) qui est radialement externe par rapport à l'axe principal A de la Turbomachine (10).

7. Turbomachine (10) selon l'une quelconque des revendications précédentes, **caractérisée en ce que** chaque bloc de montage (20) est constitué de deux parties (40) montées de part et d'autre des tronçons (26) de harnais (16) auxquels le bloc de montage (20) est associé.

8. Turbomachine (10) selon la revendication précédente, **caractérisée en ce que** les deux parties (40) d'un bloc de montage (20) sont reliées avec les tronçons (26) de harnais (16) associés avant l'assemblage du bloc de montage (20) sur la paroi de support (22).

9. Turbomachine (10) selon la revendication précédente, en combinaison avec la revendication 4, **caractérisée en ce que** chaque partie (40) du bloc de montage (20) comporte une partie de chaque fut (28) dudit bloc de montage (20).

10. Turbomachine (10) selon la revendication précédente, **caractérisé en ce que** le bras radial (18) se situe à une position 6 heures, par analogie avec le cadran d'une horloge.

## Patentansprüche

1. Turbomaschine (10) eines Luftfahrzeugs mit Hauptachse A, die beinhaltet:
- einen in Bezug auf die Hauptachse A radialen Arm (18), der sich durch einen Strom (14) einer Luftströmung erstreckt;
- eine Stützwand (22), die dem radialen Arm (18) angehört und die zwei Öffnungen (24) beinhaltet;
- eine Vielzahl von Gurten (16), die sich teilweise durch den radialen Arm (18) erstrecken, und wovon ein Teilstück (26) eines jeden Gurts (16) an der Stützwand (22) des Armes (18) fixiert ist;
**dadurch gekennzeichnet, dass** sie zwei Montageblöcke (20) beinhaltet, von denen jeder Montageblock (20) einer Gruppe von Teilstücken (26) eines Gurts (16) zugeordnet ist.

2. Turbomaschine (10) nach dem vorstehenden Anspruch, **dadurch gekennzeichnet, dass** sie Mittel zum Fixieren eines Montageblocks (20) an der Stützwand (22) beinhaltet, die unabhängig von den Mitteln zum Fixieren des anderen Montageblocks (20) an der Stützwand (22) sind.

3. Turbomaschine (10) nach Anspruch 1 oder 2, **dadurch gekennzeichnet, dass** jeder Montageblock (20) durch Verschrauben an der Stützwand (22) fixiert ist.

4. Turbomaschine (10) nach einem der vorstehenden Ansprüche,
**dadurch gekennzeichnet, dass** jeder Montageblock (20) einen Körper (30) beinhaltet, der mit der Stützwand (22) verbunden ist, und eine Hülse (28), die ein Teilstück (26) eines zugeordneten Gurts (16) aufnimmt.

5. Turbomaschine (10) nach dem vorstehenden Anspruch, **dadurch gekennzeichnet, dass** der Körper (30) eine Fläche (32) beinhaltet, die in Kontakt mit der Stützwand (22) ist, und einen Ansatz (36) beinhaltet, der in Bezug auf die Fläche (32) des Körpers (30) vorsteht, wobei der Abschnitt des Ansatzes (36) ergänzend zur Öffnung (24) ist.

6. Turbomaschine (10) nach dem vorstehenden Anspruch, wobei sich die Stützwand (22) in einer im Wesentlichen senkrechten Ebene zu einer radialen Richtung in Bezug auf die Hauptachse Ader Turbomaschine (10) erstreckt,
**dadurch gekennzeichnet, dass** die Fläche (32) des Körpers (30) an einer Fläche (34) der Stützwand (22) fixiert ist, die in Bezug auf die Hauptachse A der Turbomaschine (10) radial außen ist.

7. Turbomaschine (10) nach einem der vorstehenden Ansprüche,
**dadurch gekennzeichnet, dass** jeder Montageblock (20) aus zwei Teilen (40) besteht, die beiderseits der Teilstücke (26) eines Gurts (16) montiert sind, denen der Montageblock (20) zugeordnet ist.

8. Turbomaschine (10) nach dem vorstehenden Anspruch, **dadurch gekennzeichnet, dass** die beiden Teile (40) eines Montageblocks (20) mit den Teilstücken (26) eines Gurts (16) verbunden sind, die vor dem Zusammenfügen des Montageblocks (20) an der Stützwand (22) zugeordnet werden.

9. Turbomaschine (10) nach dem vorstehenden Anspruch, in Kombination mit Anspruch 4, **dadurch gekennzeichnet, dass** jeder Teil (40) des Montageblocks (20) einen Teil einer jeden Hülse (28) des Montageblocks (20) beinhaltet.

10. Turbomaschine (10) nach dem vorstehenden Anspruch, **dadurch gekennzeichnet, dass** sich der radiale Arm (18) entsprechend einem Zifferblatt einer Uhr in einer 6-Uhr-Position befindet.

## Claims

1. An aircraft turbine engine (10) with a main axis A including:
- an arm (18) that is radial with respect to the main axis A and which extends throughout an air flow duct (14);
- a support wall (22) belonging to the radial arm (18) and which includes two openings (24);
- a plurality of harnesses (16) partially extending throughout the radial arm (18) and
where a section (26) of each harness (16) is fastened to said support wall (22) of the arm (18);
**characterised in that** it includes two mounting blocks (20) where each mounting block (20) is associated with a group of sections (26) of the harnesses (16).

2. The turbine engine (10) according to the preceding claim, **characterised in that** it includes means for fastening a mounting block (20) on the support wall (22) which are independent of the means for fastening the other block of mounting (20) on the support wall (22).

3. The turbine engine (10) according to claim 1 or 2, **characterised in that** each mounting block (20) is fastened to the support wall (22) by bolting.

4. The turbine engine (10) according to any one of the preceding claims, **characterised in that** each mounting block (20) includes a body (30) which is connected to the support wall (22) and a barrel (28) which receives an associated section (26) of the harness (16)

5. The turbine engine (10) according to the preceding claim, **characterised in that** the body (30) includes a face (32) which is in contact with the support wall (22) and includes a shoulder (36) projecting from said face (32) of the body (30), the section of the shoulder (36) being complementary with said opening (24).

6. The turbine engine (10) according to the preceding claim, wherein the support wall (22) extends in a plane substantially perpendicular to a direction that is radial with respect to the main axis A of the turbine engine (10),
**characterised in that** said face (32) of the body (30) is fastened to a face (34) of the support wall (22) which is radially external with respect to the main axis A of the turbine engine (10).

7. The turbine engine (10) according to any one of the preceding claims, **characterised in that** each mounting block (20) consists of two portions (40) mounted on either side of the sections (26) of the harnesses (16) with which the mounting block (20) is associated.

8. The turbine engine (10) according to the preceding claim, **characterised in that** the two portions (40) of a mounting block (20) are connected with the associated sections (26) of the harnesses (16) before assembly of the mounting block (20) on the support wall (22).

9. The turbine engine (10) according to the preceding claim, in combination with claim 4, **characterised in that** each portion (40) of the mounting block (20) includes a portion of each barrel (28) of said mounting block (20).

10. The turbine engine (10) according to the preceding claim, **characterised in that** the radial arm (18) is located at a 6 o'clock position, by analogy with the dial of a clock.
